# EUROPÄISCHE PATENTSCHRIFT

(11) **EP 3 830 927 B1**
(45) Veröffentlichungstag und Bekanntmachung des Hinweises auf die Patenterteilung: **06.10.2021**
(21) Anmeldenummer: 19717279.4
(22) Anmeldetag: 09.04.2019
(51) Int. Cl.: H02J 7/34

(54) **VERSORGUNGSEINRICHTUNG MIT EINER BRENNSTOFFZELLENEINRICHTUNG UND EINER BATTERIE, BRENNSTOFFZELLENFAHRZEUG SOWIE VERFAHREN ZUM STARTEN EINER VERSORGUNGSEINRICHTUNG**
SUPPLY DEVICE HAVING A FUEL CELL DEVICE AND A BATTERY, FUEL CELL VEHICLE AND METHOD FOR STARTING A SUPPLY DEVICE
DISPOSITIF D'ALIMENTATION CONSTITUÉ D'UN SYSTÈME DE PILE À COMBUSTIBLE ET D'UNE BATTERIE, VÉHICULE À PILE À COMBUSTIBLE ET PROCÉDÉ POUR AMORCER UN DISPOSITIF D'ALIMENTATION

(30) Priorität: 02.08.2018 DE 102018212881
(43) Veröffentlichungstag der Anmeldung: 09.06.2021
(73) Patentinhaber: Audi AG, 85045 Ingolstadt (DE)
(72) Erfinder: BREU, Martin, 94377 Münster/ Steinach (DE); SCHIEDERMEIER, Maximilian, 85049 Ingolstadt (DE); SCHULTE, Fabian, 90419 Nürnberg (DE)
(86) Internationale Anmeldenummer: PCT/EP2019/058858
(87) Internationale Veröffentlichungsnummer: WO 2020/025179

(56) Entgegenhaltungen:
- WO-A1-2016/059393
- DE-A1-102014 018 197
- DE-B4-112007 003 164
- DE-T5-112006 000 895

## Beschreibung

Die Erfindung betrifft eine Versorgungseinrichtung für die elektrische Versorgung mindestens eines Verbrauchers, mit einem Primärstromnetz, in dem eine Brennstoffzelleneinrichtung vorliegt. Weiterhin umfasst die Versorgungseinrichtung ein Sekundärstromnetz, in dem eine Batterie vorliegt, die einen Betriebsspannungsbereich aufweist, der nach oben von einer Maximalspannung und nach unten von einer Minimalspannung begrenzt ist. Ferner weist die Batterie einen Betriebsstromstärkenbereich zur Bestromung des mindestens einen Verbrauchers auf. Ferner betrifft die Erfindung ein Brennstoffzellenfahrzeug mit einer solchen Versorgungseinrichtung sowie ein Verfahren zum Starten einer solchen Versorgungseinrichtung.

Wenn die Versorgungseinrichtung in Kraftfahrzeugen eingesetzt wird, unterliegt sie den unterschiedlichsten Witterungsbedigungen. Dabei können tiefe Temperaturen, die unter dem Gefrierpunkt von Wasser liegen, bekanntlich erhebliche Probleme beim Starten einer Brennstoffzelleneinrichtung in einer Versorgungseinrichtung mit sich bringen. Beispielsweise können beim Vorliegen von Frostbedingungen die Anodenräume und/oder die Kathodenräume von Eis blockiert sein, so dass Betriebsmedien nicht im gewünschten Ausmaß an den Anoden und/oder Kathoden der Brennstoffzelleneinrichtung zur Verfügung stehen. Aber auch eintritts- und austrittsseitig der Brennstoffzelleinrichtung kann Frost zu fehlerhaften Funktionen von Stellgliedern, wie Klappen, Ventilen oder dergleichen führen oder Verstopfungen der die Betriebsmedien führenden Leitungen hervorrufen.

Sofern also die Voraussetzungen der Gefahr eines Froststarts erfüllt sind, beispielsweise dann, wenn die Umgebungstemperatur unter 5 Grad Celsius liegt, wird die Brennstoffzelleneinrichtung und damit die diese umfassende Versorgungseinrichtung in einem Froststartbetrieb betrieben, bevor sie in einen Normalbetrieb übergehen kann.

Bekannte Lösungen zur Detektion von Froststartbedingungen bei einer Versorgungseinrichtung der eingangs genannten Art sehen ein Primärstromnetz vor, das stets über einen DC/DC-Wandler (Spannungswandler oder Umrichter) mit dem Sekundärstromnetz verbunden ist. Der DC/DC-Wandler umfasst dabei eine Funktion zur Impedanzspektroskopie, wodurch der Feuchtegehalt innerhalb der Brennstoffzelleneinrichtung, mithin innerhalb des Brennstoffzellenstapels, bestimmt werden kann. Mit der Impedanzmessung, wie sie beispielsweise in der DE 10 2014 224 290 A1, der DE 10 2014 018 197 A1 oder der DE 11 2007 003 164 B4 in Zusammenhang mit der Impedanzspektroskopie beschrieben ist, lassen sich Rückschlüsse auf den Membranwiderstand innerhalb einzelner Brennstoffzellen, auf den Massetransport der Reaktanten, auf den Ladungstransferwiderstand und auf die Doppelschichtkapazität ziehen.

Der Einsatz des Spannungswandlers führt aber zu zusätzlichem Gewicht und zusätzlichem Bauraum, der für die Versorgungseinrichtung bereitgestellt werden muss. Ein Brennstoffzellensystem mit einer Versorgungseinrichtung gemäß dem Oberbegriff des Anspruchs 1, bei dem der Brennstoffzellenstapel spannungswanderlfrei an die Batterie elektrisch angebunden ist, ist der DE 11 2006 000 895 T5 sowie der WO 2016 / 059 393 A1 zu entnehmen.

Es ist daher die Aufgabe der vorliegenden Erfindung, eine Versorgungseinrichtung für die elektrische Versorgung mindestens eines Verbrauchers, ein Brennstoffzellenfahrzeug mit einer solchen Versorgungseinrichtung und ein Verfahren zum Starten einer solchen Versorgungseinrichtung anzugeben, mit oder bei denen sich das Vorliegen von Froststartbedingungen auf einfache Weise detektieren lässt.

Die die Versorgungseinrichtung betreffende Aufgabe wird durch eine Versorgungseinrichtung mit dem Merkmalsbestand des Anspruches 1 gelöst. Vorteilhafte Ausgestaltungen mit zweckmäßigen Weiterbildungen der Erfindung sind in den abhängigen Ansprüchen angegeben. Dabei entspricht insbesondere eine Leerlaufspannung der Brennstoffzelleneinrichtung höchstens der Maximalspannung der Batterie, wobei in dem Primärstromnetz eine Impedanzspektroskopieeinrichtung vorliegt, die ausgebildet ist, eine Impedanzspektroskopiemessung an der Brennstoffzelleneinrichtung oder an einzelnen Brennstoffzellen der Brennstoffzelleneinrichtung durchzuführen.

Die Impedanzspektroskopieeinrichtung wird dann also genutzt, um die Brennstoffzelleneinrichtung daraufhin zu überprüfen, ob in dieser oder an ihren Konstituenten die Bedingungen für einen Froststart vorliegen. Werden Froststartbedingungen festgestellt, so kann beispielsweise ein Heizelement aktiviert werden, um die Brennstoffzelleneinrichtung zu erwärmen, wodurch von Eis blockierte Teile wieder zugänglich werden. Alternativ kann auch der Massenfluss der Reaktanten erhöht werden, um ein Spülen der Zellen oder der Reaktantenräume herbeizuführen, um etwaige Blockaden zu lösen. Es kommt zudem in Betracht, dass die Brennstoffzelleneinrichtung mit einer niedrigeren Spannung betrieben wird. Durch die niedrige Spannung der Brennstoffzelleneinrichtung wird mehr Wärme von den einzelnen Brennstoffzellen pro Gramm H₂ produziert, so dass sich die Brennstoffzelleneinrichtung selbsttätig erwärmt und etwaiges Eis geschmolzen wird.

Die Impedanzspektroskopieeinrichtung kann speziell auf die Anforderungen der Brennstoffzelleneinrichtung ausgebildet werden, ohne dass sie dabei Restriktionen aufgrund eines im Primärstromnetz und/oder Sekunderstromnetz eingesetzten DC/DC-Wandlers unterliegt. Sie bietet zudem eine kostengünstigere Umsetzung als der Einsatz eines DC/DC-Wandlers, womit sich ein kompaktes Modul einer Versorgungseinrichtung bereitstellen lässt, das einen vereinfachten Aufbau aufweist.

Als Verbraucher kommt im Rahmen der Erfindung beispielsweise eine Antriebseinrichtung mit einem Antriebsaggregat infrage. Wenn sie elektrisch an das Sekundärstromnetz angeschlossen ist, kann sie dem Antreiben eines Brennstoffzellenfahrzeugs dienen, insoweit also dem Bereitstellen eines dem Antreiben des Brennstoffzellenfahrzeugs gerichteten Antriebsdrehmoments. Die Antriebseinrichtung verfügt hierzu über wenigstens ein Antriebsaggregat, welches als elektrische Maschine ausgestaltet ist, und über das Primärstromnetz und/oder das Sekundärstromnetz mit elektrischer Energie versorgt werden kann. Selbstverständlich kann die Antriebseinrichtung als eine Hybridantriebseinrichtung ausgestaltet sein und insoweit zusätzlich zu dem Antriebsaggregat wenigstens ein weiteres Antriebsaggregat aufweisen, welches von einem anderen Typ ist als das Antriebsaggregat. Das weitere Antriebsaggregat liegt beispielsweise als Brennkraftmaschine oder dergleichen vor.

Das Primärstromnetz und das Sekundärstromnetz bilden vorzugsweise ein Bordnetz des Brennstoffzellenfahrzeugs oder stellen zumindest einen Bereich eines solchen Bordnetzes dar. In dem Primärstromnetz ist eine erste Stromquelle in Form der Brennstoffzelleneinrichtung vorgesehen und in dem Sekundärstromnetz ist eine zweite Stromquelle in Form der Batterie vorgesehen. Die Brennstoffzelleneinrichtung kann in Form einer einzigen Brennstoffzelle vorliegen oder alternativ als Brennstoffzellenstapel (Brennstoffzellenstack) mit mehreren Brennstoffzellen. Die Brennstoffzelleneinrichtung dient der zuverlässigen Versorgung des Bordnetzes mit elektrischer Energie. Die Batterie dient ebenfalls der zuverlässigen Versorgung des Bordnetzes mit elektrischer Energie und ist zur Zwischenspeicherung der Energie vorgesehen, insbesondere von Energie, die mittels der Brennstoffzelleneinrichtung bereitgestellt wurde.

Der Verbraucher, mithin die elektrische Maschine, ist elektrisch an das Sekundärstromnetz angeschlossen und vorzugsweise während eines Fahrbetriebs des Brennstoffzellenfahrzeugs permanent mit der Batterie elektrisch verbunden. Die Anbindung des Verbrauchers in Form eines Antriebsaggregat an das Sekundärstromnetz kann beispielsweise über einen Umrichter, insbesondere einen Pulswechselrichter, realisiert sein.

Im Rahmen der Erfindung hat es sich als vorteilhaft erwiesen, wenn die Impedanzspektroskopieeinrichtung ausgebildet ist, einen Wechselstrom unterschiedlicher Frequenzen auf Stromabnehmer der Brennstoffzelleneinrichtung einzuprägen. Anhand dieses Wechselstroms lässt sich die Impedanz, also der Wechselspannungswiderstand, bestimmen. Wenn dieser von einem Normalwert abweicht, liefert er die Rückinformation darauf, dass die Bedingungen eines Froststarts vorliegen.

Bisher war es möglich, mit einem DC/DC-Konverter solche Wechselströme in die Stromabnehmer der Brennstoffzelleneinrichtung einzuprägen, um die Impedanz der Brennstoffzelleneinrichtung zu bestimmen. Da aber der Spannungswandler vorzugsweise bei der vorliegenden Erfindung entfällt, wird die Impedanzspektroskopieeinrichtung eingesetzt, um die Impedanz der Brennstoffzelleneinrichtung messen oder bestimmen zu können, so dass diese Funktion bei einer wandlerfreien Ausgestaltung der Versorgungseinrichtung beibehalten ist.

Es besteht die Möglichkeit, dass die Impedanzspektroskopieeinrichtung ausgebildet ist, den Strom und/oder die Spannung der Brennstoffzelleneinrichtung selbst zu messen und vorzugsweise deren zeitlichen Verlauf aufzuzeichnen. Damit bildet die Impedanzspektroskopieeinrichtung ein Messsystem, welches eine zuverlässige Auskunft über den Betriebszustand der Brennstoffzelleneinrichtung gibt. Auch Alterungseffekte an der Brennstoffzelleneinrichtung lassen sich detektieren, wenn ein zeitlicher Messverlauf aufgezeichnet wird.

Vorzugsweise weist das Primärstromnetz einen ersten Primärstromnetzanschluss und einen zweiten Primärstromnetzanschluss auf, wobei die Impedanzspektroskopieeinrichtung einenends an den ersten Primärstromnetzanschluss und anderenends an den zweiten Primärstromnetzanschluss angeschlossen ist. Weiterhin weist das Sekundärstromnetz einen ersten Sekundärstromnetzanschluss und einen zweiten Sekundärstromnetzanschluss auf, wobei der erste Primärstromnetzanschluss und der erste Sekundärstromnetzanschluss über eine Sperrdiode und der zweite Primärstromnetzanschluss und der zweite Sekundärstromnetzanschluss unmittelbar aneinander angeschlossen sind. Damit liegt an dem zweiten Primärstromnetzanschluss und dem zweiten Sekundärstromnetzanschluss insoweit dasselbe elektrische Potenzial vor. Der erste Primärstromnetzanschluss und der erste Sekundärstromnetzanschluss sind hingegen lediglich mittelbar über die Sperrdiode aneinander angeschlossen. Die Brennstoffzelleneinrichtung und die Batterie sind aufeinander abgestimmt und ermöglichen ein äußerst effizientes Betreiben der Versorgungseinrichtung, die sich zudem durch einen sehr einfachen und kostengünstigen Aufbau auszeichnet, da ein Spannungswandler entfällt. In diesem Zusammenhang hat es sich also als vorteilhaft erwiesen, wenn das Primärstromnetz spannungswandlerfrei an das Sekundärstromnetz angeschlossen ist.

Vorzugsweise weist die Sperrdiode ihre Durchlassrichtung von dem Primärstromnetz in Richtung des Sekundärstromnetzes auf. Entsprechend kann bei ausreichend hoher Spannung in dem Primärstromnetz elektrische Energie aus dem Primärstromnetz in das Sekundärstromnetz gelangen. Die umgekehrte Übertragungsrichtung ist demgegenüber ausgeschlossen, so dass kein Strom aus der Batterie in die Brennstoffzelleneinrichtung fließt. Eine Beaufschlagung des Primärstromnetz mit einer unzulässig hohen Spannung wird vermieden.

Eine Weiterbildung der Erfindung sieht vor, dass die Batterie eine bestimmte Anzahl an Batteriezellen aufweist und/oder die Brennstoffzelleneinrichtung eine bestimmte Anzahl an Brennstoffzellen aufweist, wobei die Anzahl der Batteriezellen und/oder die Anzahl der Brennstoffzellen derart gewählt ist, dass die Leerlaufspannung der Brennstoffzelleneinrichtung der Maximalspannung der Batterie entspricht. Vorzugsweise entspricht jedoch die Leerlaufspannung der Brennstoffzelleneinrichtung im Wesentlichen mindestens 85 % der Maximalspannung, vorzugsweise 90 % der Maximalspannung, weiterhin vorzugsweise 95 % der Maximalspannung der Batterie. Durch eine derartige Konfiguration kann eine Abstimmung der Spannungs-Strom-Kennlinien von Brennstoffzelleneinrichtung und Batterie erfolgen, und zwar über die Anzahl der Batteriezellen und/oder die Anzahl der Brennstoffzellen der Brennstoffzelleneinrichtung. Alternativ oder ergänzend können unterschiedliche Typen an Batteriezellen, beispielsweise mit unterschiedlichen Nennspannungen, zur Abstimmung der Kennlinie der Batterie auf diejenige der Brennstoffzelleneinrichtung herangezogen werden.

Weiterhin wird durch die entsprechende Wahl des Betriebsstromstärkenbereich und/oder wiederum durch die Auswahl der Anzahl und Ausführungsform von Batteriezellen und/oder die Anzahl und Ausführungsform der Brennstoffzellen bzw. des Typs der Batteriezellen sichergestellt, dass die von der Brennstoffzelleneinrichtung bereitgestellte Brennstoffzellenspannung über den Betriebstromstärkenbereich hinweg größer ist als die Minimalspannung der Batterie. Die Abstimmung der Brennstoffzelleneinrichtung und der Batterie aufeinander erfolgt insoweit allein durch einfach umzusetzende Maßnahmen bei der Auslegung der Brennstoffzelleneinrichtung und der Batterie.

Weiterhin hat es sich als vorteilhaft erwiesen, wenn die Impedanzspektroskopieeinrichtung als ein getaktet betreibbarer Leistungshalbleiterschalter gebildet ist. Hierdurch lässt sich ein Wechselstrom, vorzugsweise unterschiedlicher Frequenzen, in die Brennstoffzelleneinrichtung einprägen. Als besonders betriebssicherer, langlebiger und kurze Schaltzeiten aufweisender Leistungshalbleiterschalter hat sich ein MOSFET (Metall-Oxid-Halbleiter-Feldeffekttransistor) bewährt.

Die das Brennstoffzellenfahrzeug betreffende Aufgabe wird mit einem Brennstoffzellenfahrzeug mit dem Merkmalsbestand des Anspruchs 9 gelöst. Der Einsatz der elektrischen Versorgungseinrichtung bei diesem Brennstoffzellenfahrzeug führt zu einem geringeren Gesamtgewicht, wobei Bauraum und Kosten eingespart werden.

Die das Verfahren betreffende Aufgabe wird durch ein Verfahren mit dem Merkmalsbestand des Anspruchs 10 gelöst, welches sich insbesondere durch die folgenden Schritte auszeichnet:
a. Aufprägen eines Wechselstroms auf Stromabnehmer einer Brennstoffzelleneinrichtung (5) mittels einer Impedanzspektroskopieeinrichtung (15),
b. Erfassen eines Antwortsignals und Vergleichen des Antwortsignals mit einem vorgegebenen Signalwert, und
c1. im Falle des Feststellens einer Abweichung des Antwortsignals vom vorgegebenen Signalwert in einer Höhe von mindestens einem vordefinierten Betrag, Starten der Versorgungseinrichtung in einem Froststartbetrieb, oder
c2. im Falle des Feststellens einer Abweichung des Anwortsignals vom vorgegebenen Signalwert in einer Höhe, die geringer ist als der vordefinierte Betrag, Starten der Versorgungseinrichtung in einem Normalbetrieb.

Das Feststellen einer Bedingung eines Froststarts wird also mittels einer Impedanzmessung, insbesondere einer elektrochemischen Impedanzspektroskopie, an der Brennstoffzelleneinrichtung realisiert. Hierzu wird eine besonders kompakt gebildete Versorgungseinrichtung eingesetzt. Als Signale kommen beispielsweise ein Spannungssignal oder auch ein Stromsignal in Betracht. Es ist auch die Möglichkeit eröffnet, die Impedanz, also den Wechselspannungswiderstand der Brennstoffzelleneinrichtung oder einzelner Brennstoffzellen von dieser, unmittelbar zu bestimmen.

Weitere Vorteile, Merkmale und Einzelheiten der Erfindung ergeben sich aus den Ansprüchen, der nachfolgenden Beschreibung bevorzugte Ausführungsform und sowie anhand der Zeichnungen. Dabei zeigen:

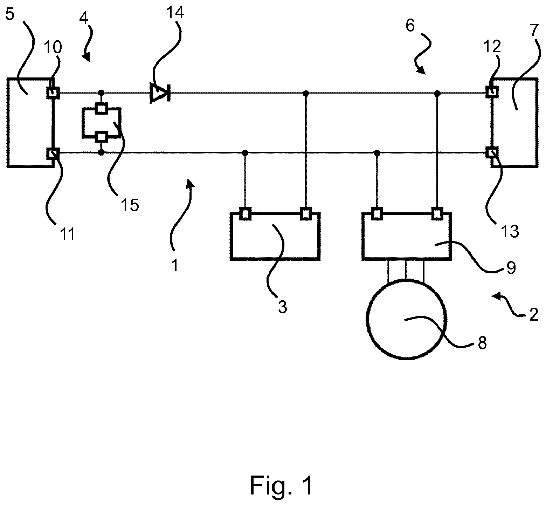

- Figur 1: eine schematische Darstellung einer Versorgungseinrichtung für die elektrische Versorgung mindestens eines Verbrauchers in Form einer Antriebseinrichtung mit Antriebsaggregat zum Antreiben eines Brennstoffzellenfahrzeugs.

In Figur 1 ist eine schematische Darstellung einer Versorgungseinrichtung 1 für die elektrische Versorgung eines ersten Verbrauchers 2 und eines zweiten Verbrauchers 3 gezeigt. Die vorliegende Versorgungseinrichtung 1 kann vorzugsweise auch weitere nicht näher dargestellte Verbraucher mit elektrischer Energie versorgen.

Die Versorgungseinrichtung 1 umfasst ein Primärstromnetz 4, in dem eine Brennstoffzelleneinrichtung 5 vorliegt. Außerdem umfasst die Versorgungseinrichtung 1 ein Sekundärstromnetz 6, in dem eine Batterie 7 vorliegt, die einen Betriebsspannungsbereich aufweist, der nach oben von einer Maximalspannung und nach unten von einer Minimalspannung begrenzt ist. Zudem weist die Batterie 7 einen Betriebsstromstärkenbereich auf, der nach unten von einer Minimalstromstärke und nach oben von einer maximal Stromstärke begrenzt ist. Die Batterie 7 ist ausgelegt, die Verbraucher 2, 3 zu bestromen.

Der Verbraucher 2 umfasst ein Antriebsaggregat 8, welches in Form einer elektrischen Maschine vorliegt. Diese elektrische Maschine ist typischerweise mittels eines Drei-Phasen-Wechselstroms betreibbar und ist vorzugsweise als Fahrmotor für ein Brennstoffzellenfahrzeug gebildet. Da das Primärstromnetz 4 und auch das Sekundärstromnetz 6 eine Hochspannung und einen Gleichstrom liefern, ist dem Verbraucher 2 zusätzlich der Wechselrichter 9 zugeordnet, der den Gleichstrom in den Drei-Phasen-Wechselstrom wandelt. In einer Weiterbildung des Verbrauchers 2 kann das Antriebsaggregat 8 auch als Generator eingesetzt werden, so dass beispielsweise beim Bremsvorgang durch das Antriebsaggregat 8 erzeugte Energie der Batterie 7 über den Wechselrichter 9 wieder zugeführt werden kann.

Der Verbraucher 3 kann ebenfalls an das aus dem Primärstromnetz 4 und Sekundärstromnetz 6 gebildete Bordnetz angeschlossen sein. Als Verbraucher 3 kommen beispielsweise Nebenaggregate der Brennstoffzelleneinrichtung 5, ein Ladegerät, ein 12V-Gleichstrom-Gleichstromwandler, ein Hochspannungs-Heizer, ein elektrischer Klimakompressor oder dergleichen in Betracht.

Wie sich der Figur 1 entnehmen lässt, ist das Primärstromnetz 4 an das Sekundärstromnetz 6 wandlerlos oder spannungswandlerfrei angeschlossen. Die Brennstoffzelleneinrichtung 5 weist einen ersten Primärstromnetzanschluss 10 und einen zweiten Primärstromnetzanschluss 11 auf. Die Batterie 7 im Sekundärstromnetz 6 weist dementsprechend einen ersten Sekundärstromnetzanschluss 12 und einen zweiten Sekundärstromnetzanschluss 13 auf. Der erste Primärstromnetzanschluss 10 ist über eine Sperrdiode 14 an den ersten Sekundärstromnetzanschluss 12 angeschlossen. Eine Durchlassrichtung der Sperrdiode 14 liegt dabei in einer Richtung von dem Primärstromnetz 4 zu dem Sekundärstromnetz 6 vor. Der zweite Primärstromnetzanschluss 11 ist hingegen unmittelbar mit dem zweiten Sekundärstromnetz Anschluss 13 elektrisch verbunden.

Im Primärstromnetz 4 liegt außerdem eine Impedanzspektroskopieeinrichtung 15 vor, die ausgebildet ist, eine Impedanzspektroskopiemessung an der Brennstoffzelleneinrichtung 5 durchzuführen. Vorliegend ist die Impedanzspektroskopieeinrichtung 15 parallel zur Brennstoffzelleneinrichtung 5 geschaltet und ausgebildet, einen Wechselstrom unterschiedlicher Frequenzen auf Stromabnehmer der Brennstoffzelleneinrichtung 5 einzuprägen. Alternativ oder ergänzend ist die Impedanzspektroskopieeinrichtung 15 auch ausgebildet, den Strom und/oder die Spannung der Brennstoffzelleneinrichtung 5 zu messen und vorzugsweise deren zeitlichen Verlauf aufzuzeichnen. Vorzugsweise ist die Impedanzspektroskopieeinrichtung 15 einenends an dem ersten Primärstromnetzanschluss 10 elektrisch angeschlossen und anderenends mit dem zweiten Primärstromnetzanschluss 11 elektrisch verbunden. Beide Verbindungen sind hierbei unmittelbar, so dass insbesondere die Sperrdiode 14 keinen Einfluss auf die Impedanzspektroskopieeinrichtung 15 nimmt. Die Impedanzspektroskopieeinrichtung 15 kann als ein getaktet betreibbarer Leistungshalbleiterschalter, insbesondere ein MOSFET gebildet sein.

Zur Detektion von Froststartbedingungen wird der MOSFET derart getaktet betrieben, dass die so gebildete Impedanzspektroskopieeinrichtung 15 einen Wechselstrom auf die Stromabnehmer der Brennstoffzelleneinrichtung prägt.

Dann wird ein Antwortsignal erfasst und mit einem vorgegebenen Signalwert verglichen. Wenn eine Abweichung des Antwortsignals vom vorgegebenen Signalwert festgestellt wird, so kann dies ein Hinweis auf das Vorliegen einer Frostsituation darstellen. Allerdings können geringfügige Abweichungen in Kauf genommen werden, so dass ein Abweichungsbereich vorgegeben ist. Abweichungen um einen vorgegebenen Betrag führen also noch immer zu einem Starten der Versorgungseinrichtung 1 in einem Normalbetrieb. Wird jedoch eine Abweichung festgestellt, die außerhalb des vorgegebenen Abweichungsbereichs liegt und die damit größer als der vordefinierte Abweichungsbetrag ist, so wird die Versorgungseinrichtung 1 in einem Froststartbetrieb betrieben oder gestartet.

Mit einer derartigen Ausgestaltung kann ein sehr effizienter Betrieb der Versorgungseinrichtung 1 sichergestellt werden. Entsprechendes gilt also für eine Antriebseinrichtung, die mit einer solchen Versorgungseinrichtung 1 mit elektrischer Energie versorgt wird. Außerdem kann die Versorgungseinrichtung 1 sehr einfach ausgeführt sein, so dass sich beim Einsatz in einem Brennstoffzellenfahrzeug Bauraum- und Kostenvorteile ergeben.

### BEZUGSZEICHENLISTE:

- 1: Versorgungseinrichtung
- 2: Verbraucher
- 3: (zweiter) Verbraucher
- 4: Primärstromnetz
- 5: Brennstoffzelleneinrichtung
- 6: Sekundärstromnetz
- 7: Batterie
- 8: Antriebsaggregat
- 9: Wechselrichter
- 10: erster Primärstromnetzanschluss
- 11: zweiter Primärstromnetzanschluss
- 12: erste Sekundärstromnetzanschluss
- 13: zweiter Sekundärstromnetzanschluss
- 14: Sperrdiode
- 15: Impedanzspektroskopieeinrichtung

## Patentansprüche

1. Versorgungseinrichtung (1) für die elektrische Versorgung mindestens eines Verbrauchers (2,3), mit einemPrimärstromnetz (4), in dem eine einen ersten Primärstromnetzanschluss (10) und einen zweiten Primärstromnetzanschluss (11) aufweisenden Brennstoffzelleneinrichtung (5) vorliegt, mit einem Sekundärstromnetz (6), in dem eine einen ersten Sekundärstromnetzanschluss (12) und einen zweiten Sekundärstromnetzanschluss (13) aufweisende Batterie (7) vorliegt, die einen Betriebsspannungsbereich aufweist, der nach oben von einer Maximalspannung und nach unten von einer Minimalspannung begrenzt ist, und die einen Betriebsstromstärkenbereich zur Bestromung des mindestens einen Verbrauchers (2,3) aufweist, wobei der erste Primärstromnetzanschluss (10) und der erste Sekundärstromnetzanschluss (12) über eine Sperrdiode (14) und der zweite Primärstromnetzanschluss (12) und der zweite Sekundärstromnetzanschluss (13) unmittelbar aneinander angeschlossen sind wodurch das Primärstromnetz (4) spannungswandlerfrei an das Sekundärstromnetz (13) angeschlossen ist und eine Leerlaufspannung der Brennstoffzelleneinrichtung (5) höchstens der Maximalspannung der Batterie (7) entspricht, **dadurch gekennzeichnet, dass** in dem Primärstromnetz (4) eine Impedanzspektroskopieeinrichtung (15) vorliegt, die ausgebildet ist, eine Impedanzspektroskopiemessung zur Überprüfung des Vorliegens von Froststartbedingungen an der Brennstoffzelleneinrichtung (5) oder an einzelnen Brennstoffzellen der Brennstoffzelleneinrichtung (5) durchzuführen, wobei die Impedanzspektroskopieeinrichtung (15) einenends an den ersten Primärstromnetzanschluss (10) und anderenends an den zweiten Primärstromnetzanschluss (11) angeschlossen ist.

2. Versorgungseinrichtung (1) nach Anspruch 1, **dadurch gekennzeichnet, dass** die Impedanzspektroskopieeinrichtung (15) ausgebildet ist, einen Wechselstrom unterschiedlicher Frequenzen auf Stromabnehmer der Brennstoffzelleneinrichtung (5) einzuprägen.

3. Versorgungseinrichtung (1) nach Anspruch 1 oder 2, **dadurch gekennzeichnet, dass** die Impedanzspektroskopieeinrichtung (15) ausgebildet ist, den Strom und/oder die Spannung der Brennstoffzelleneinrichtung (5) zu messen.

4. Versorgungseinrichtung (1) nach einem der Ansprüche 1 bis 3, **dadurch gekennzeichnet, dass** die Batterie (7) eine bestimmte Anzahl an Batteriezellen aufweist und/oder die Brennstoffzelleneinrichtung (5) eine bestimmte Anzahl an Brennstoffzellen aufweist, wobei die Anzahl der Batteriezellen und/oder die Anzahl der Brennstoffzellen derart gewählt ist, dass die Leerlaufspannung der Brennstoffzelleneinrichtung (5) der Maximalspannung der Batterie (7) entspricht.

5. Versorgungseinrichtung (1) nach einem der Ansprüche 1 bis 4, **dadurch gekennzeichnet, dass** die Impedanzspektroskopieeinrichtung (15) als ein getaktet betreibbarer Leistungshalbleiterschalter gebildet ist.

6. Versorgungseinrichtung (1) nach Anspruch 5, **dadurch gekennzeichnet, dass** der getaktet betreibbare Leistungshalbleiterschalter ein MOSFET ist.

7. Brennstoffzellenfahrzeug mit einer Versorgungseinrichtung (1) nach einem der Ansprüche 1 bis 6.

8. Verfahren zum Starten einer Versorgungseinrichtung (1) nach einem der Ansprüche 1 bis 6, **gekennzeichnet durch** folgende Schritte:
a. Aufprägen eines Wechselstroms auf Stromabnehmer einer Brennstoffzelleneinrichtung (5) mittels einer Impedanzspektroskopieeinrichtung (15),
b. Erfassen eines Antwortsignals und Vergleichen des Antwortsignals mit einem vorgegebenen Signalwert, und
c1. im Falle des Feststellens einer Abweichung des Antwortsignals vom vorgegebenen Signalwert in einer Höhe von mindestens einem vordefinierten Betrag, Starten der Versorgungseinrichtung in einem Froststartbetrieb, in welchem die Brennstoffzelleneinrichtung (5) erwärmt wird oder in welchem ein Massenfluss der Reaktanten erhöht wird, oder
c2. im Falle des Feststellens einer Abweichung des Anwortsignals vom vorgegebenen Signalwert in einer Höhe, die geringer ist als der vordefinierte Betrag, Starten der Versorgungseinrichtung in einem Normalbetrieb.

## Claims

1. Supply device (1) for the electrical supply of at least one consumer (2, 3), with a primary power supply system (4), in which a fuel cell device (5) having a first primary power supply system connection (10) and a second primary power supply system connection (11) is present, with a secondary power supply system (6), in which a battery (7) having a first secondary power supply system connection (12) and a second secondary power supply system connection (13) is present, which battery has an operational voltage range, which has an upper limit of a maximum voltage and a lower limit of a minimum voltage, and which has an operational current intensity range for supplying current to the at least one consumer (2, 3), wherein the first primary power supply system connection (10) and the first secondary power supply system connection (12) are connected to each other via a barrier diode (14) and the second primary power supply system connection (12) and the second secondary power supply system connection (13) are directly connected to each other, whereby the primary power supply system (4) is connected to the secondary power supply system (13) without a voltage transformer and a no-load voltage of the fuel cell device (5) corresponds at most to the maximum voltage of the battery (7), **characterised in that** an impedance spectroscopy device (15) is present in the primary power supply system (4), which impedance spectroscopy device is configured to carry out an impedance spectroscopy measurement to check for the presence of frost start conditions at the fuel cell device (5) or at individual fuel cells of the fuel cell device (5), the impedance spectroscopy device (15) being connected at one end to the first primary power supply system connection (10) and at the other end to the second primary power supply system connection (11).

2. Supply device (1) according to claim 1, **characterised in that** the impedance spectroscopy device (15) is configured to apply an alternating current of different frequencies to current collectors of the fuel cell device (5).

3. Supply device (1) according to claim 1 or 2, **characterised in that** the impedance spectroscopy device (15) is configured to measure the current and/or the voltage of the fuel cell device (5).

4. Supply device (1) according to any one of claims 1 to 3, **characterised in that** the battery (7) has a specified number of battery cells and/or the fuel cell device (5) has a specified number of fuel cells, the number of battery cells and/or the number of fuel cells being selected in such a way that the no-load voltage of the fuel cell device (5) corresponds to the maximum voltage of the battery (7).

5. Supply device (1) according to any one of claims 1 to 4, **characterised in that** the impedance spectroscopy device (15) is formed as a power semiconductor switch that can be operated in a clocked manner.

6. Supply device (1) according to claim 5, **characterised in that** the power semiconductor switch that can be operated in a clocked manner is a MOSFET.

7. Fuel cell vehicle comprising a supply device (1) according to any one of claims 1 to 6.

8. Method for starting a supply device (1) according to any one of claims 1 to 6, **characterised by** the following steps:
a. applying an alternating current to a current collector of a fuel cell device (5) by means of an impedance spectroscopy device (15),
b. detecting a response signal and comparing the response signal with a specified signal value, and
c1. in the event that a deviation of the response signal from the specified signal value is detected with a magnitude of at least a predefined amount, starting the supply device in a frost start mode, in which the fuel cell device (5) is heated up or in which a mass flux of the reactants is increased, or
c2. in the event that a deviation of the response signal from the specified signal value is detected with a magnitude that is lower than the predefined amount, starting the supply device in a normal mode.

## Revendications

1. Appareil d'alimentation (1) pour l'alimentation électrique d'au moins un consommateur (2, 3), avec un système d'alimentation électrique primaire (4), dans lequel se trouve un appareil à piles à combustible (5) présentant une première connexion au système d'alimentation électrique primaire (10) et une seconde connexion au système d'alimentation électrique primaire (11), avec un système d'alimentation électrique secondaire (6), dans lequel se trouve une batterie (7) présentant une première connexion d'alimentation secondaire (12) et une seconde connexion d'alimentation secondaire (13), qui présente une plage de tension de fonctionnement qui est limitée en haut par une tension maximale et en bas par une tension minimale, et qui présente une plage d'intensité de courant de fonctionnement pour l'alimentation en courant de l'au moins un consommateur (2, 3), dans lequel la première connexion d'alimentation électrique primaire (10) et la première connexion d'alimentation électrique secondaire (12) sont reliées directement l'une à l'autre via une diode de blocage (14) et la seconde connexion d'alimentation électrique primaire (12) et la seconde connexion d'alimentation électrique secondaire (13) sont reliées directement l'une à l'autre, de sorte que l'alimentation électrique primaire (4) est reliée à l'alimentation électrique secondaire (13) sans transformateur de tension et qu'une tension de circuit ouvert de l'appareil à piles à combustible (5) correspond au maximum à la tension maximale de la batterie (7), **caractérisé en ce qu'**un appareil de spectroscopie d'impédance (15) se trouve dans le système d'alimentation électrique primaire (4), lequel appareil est réalisé pour effectuer une mesure de spectroscopie d'impédance pour vérifier la présence de conditions de démarrage par le gel sur l'appareil à piles à combustible (5) ou sur des piles à combustible individuelles de l'appareil à piles à combustible (5), dans lequel l'appareil de spectroscopie d'impédance (15) est connecté à une extrémité à la première connexion du système d'alimentation électrique primaire (10) et à l'autre extrémité à la seconde connexion du système d'alimentation électrique primaire (11).

2. Appareil d'alimentation (1) selon la revendication 1, **caractérisé en ce que** l'appareil de spectroscopie d'impédance (15) est réalisé pour appliquer un courant alternatif de différentes fréquences sur les collecteurs de courant de l'appareil à piles à combustible (5).

3. Appareil d'alimentation (1) selon la revendication 1 ou 2, **caractérisé en ce que** l'appareil de spectroscopie d'impédance (15) est réalisé pour mesurer le courant et/ou la tension de l'appareil à piles à combustible (5).

4. Appareil d'alimentation (1) selon l'une quelconque des revendications 1 à 3, **caractérisé en ce que** la batterie (7) présente un nombre déterminé de cellules de batterie et/ou l'appareil à piles à combustible (5) présente un nombre déterminé de piles à combustible, dans lequel le nombre de cellules de batterie et/ou le nombre de piles à combustible est choisi de telle sorte que la tension en circuit ouvert de l'appareil à piles à combustible (5) correspond à la tension maximale de la batterie (7).

5. Appareil d'alimentation (1) selon l'une quelconque des revendications 1 à 4, **caractérisé en ce que** l'appareil de spectroscopie d'impédance (15) est formé comme un commutateur semi-conducteur de puissance pouvant fonctionner de manière cadencée.

6. Appareil d'alimentation (1) selon la revendication 5, **caractérisé en ce que** le commutateur semi-conducteur de puissance pouvant fonctionner de manière cadencée est un MOSFET.

7. Véhicule à piles à combustible avec un appareil d'alimentation (1) selon l'une quelconque des revendications 1 à 6.

8. Procédé de démarrage d'un appareil d'alimentation (1) selon l'une quelconque des revendications 1 à 6, **caractérisé par** les étapes suivantes :
a. application d'un courant alternatif sur les collecteurs de courant d'un appareil à piles à combustible (5) au moyen d'un appareil de spectroscopie d'impédance (15),
b. détection d'un signal de réponse et comparaison du signal de réponse avec une valeur de signal prédéterminée, et
c1. en cas de détection d'une déviation du signal de réponse par rapport à la valeur de signal prédéterminée à hauteur d'au moins une quantité prédéfinie, démarrage de l'appareil d'alimentation dans un mode de démarrage par gel dans lequel l'appareil à piles à combustible (5) est chauffé ou dans lequel un débit massique des réactifs est augmenté, ou
c2. en cas de détection d'une déviation du signal de réponse par rapport à la valeur de signal prédéfinie à une hauteur qui est inférieure à la quantité prédéfinie, démarrage de l'appareil d'alimentation dans un mode normal.
